# DEMANDE DE BREVET EUROPEEN

(11) **EP 0 661 857 A1**
(43) Date de publication de la demande: **05.07.1995**
(21) Numéro de dépôt: 94402684.8
(22) Date de dépôt: 24.11.1994
(51) Int. Cl.: H04L 29/06

(54) **Procédé de conversion automiatique d'applications de télécommunication**

(30) Priorité: 30.11.1993 FR 9314288
(71) Demandeur: BULL S.A., F-78430 Louveciennes (FR)
(72) Inventeur: Sitbon, Gérard, F-94400 Vitry (FR); Bassier, Jean-François, F-94370 Sucy-en-Brie (FR); Katrantzis, Bernard, F-94400 Vitry (FR)

(57) **Abrégé**

L'invention concerne un procédé de conversion d'adressage pour le portage d'une application de télécommunication APP du réseau TCP/IP sur le réseau OSI-CO ainsi qu'un module de conversion d'adressage utilisé dans ce procédé. De manière connue, l'accès aux réseaux est autorisé par l'intermédiaire d'une interface "socket" (SOC) pour le réseau TCP/IP et d'une interface "XTI" pour le réseau OSI-CO. De manière remarquable les appels (SC) de l'interface "socket" sont, ainsi qu'une pluralité d'appels système (SY), dans un premier temps orientés, au moment de la phase d'édition de liens avant l'obtention de l'exécutable, vers un module (W) de conversion automatique d'adressage du genre librairie. Ce module (W) réalise alors la conversion des adresses propres au réseau TCP/IP en adresses du réseau OSI-CO et permet le passage du protocole TCP/IP vers le protocole OSI-CO. Après conversion les appels sont transmis vers l'interface "XTI" et peuvent être directement exploités dans le réseau OSI-CO. Seuls les appels destinés au réseau TCP/IP sont traités, tout autre appel (NT) est renvoyé vers le système.

## Description

La présente invention concerne un procédé de conversion d'adressage pour le portage d'applications de télécommunication du réseau TCP/IP sur le réseau OSI-CO, l'accès aux dits réseaux étant autorisé par l'intermédiaire d'une interface dite "socket" pour le réseau TCP/IP et d'une interface dite "XTI" pour le réseau OSI-CO. Elle concerne également un module de conversion d'adressage utilisé dans ledit procédé.

De manière générale, bien qu'ancienne, l'architecture TCP/IP (Transmission Control Protocol/Internet Protocol) est toujours répandue sur un grand nombre de matériels hétérogènes. IP se situe au niveau 3 du modèle OSI et assure l'interconnexion des réseaux et TCP correspond au niveau 4 du modèle OSI et, offre de manière efficace un service de transport orienté connexion. Cependant les utilisateurs de réseau TCP/IP sont amenés à évoluer vers l'architecture d'interconnexion OSI (Open System Interconnection) permettant à des systèmes hétérogènes de s'interconnecter et d'interagir éventuellement en vue de la réalisation d'applications distribuées. Néanmoins, le rapide développement du marché des réseaux locaux a entraîné un retour important des protocoles TCP/IP parfois au détriment des protocoles conformes à l'OSI. Pour ces différentes raisons ces deux types de réseaux sont amenés à cohabiter et il est donc, dans certains cas, utile de pouvoir reprendre une application tournant dans un réseau TCP/IP et de la faire tourner dans un réseau OSI-CO (orienté connexion).

Jusqu'à présent, de manière connue l'exploitation d'une application d'un monde à l'autre, c'est-à-dire d'un réseau TCP/IP à un réseau OSI-CO, présentait l'inconvénient d'être une opération lourde pour laquelle un temps important devait être consacré et donc une opération génératrice de coûts élevés. En effet pour qu'une application TCP/IP standard du genre FTP (File Transfer Protocol), Telnet (gestion de terminal virtuel), RPC (Remote Procedure Call) DCE (Distributed Computing Environment) puisse être exploitée sur OSI, il fallait reprendre le code source, le mettre à jour ou le modifier, redescendre tous les appels, appeler les primitives et enfin refaire un adressage, et parce qu'une telle opération était particulièrement pénible et délicate elle était peu ou n'était pas utilisée.

La présente invention a pour but de remédier à l'inconvénient précité et propose un procédé de conversion d'adressage pour le portage d'applications de télécommunication du réseau TCP/IP sur le réseau OSI-CO qui ne requiert pas de modification du code source, qui opère de manière automatique la conversion et qui par conséquent est peu onéreux et rapide.
Pour cela, le procédé de conversion d'adressage mentionné dans le préambule est remarquable en ce que les appels de l'interface dite "socket" sont, ainsi qu'une pluralité d'appels système du genre lecture, écriture, fermeture, dans un premier temps orientés, au moment de la phase d'édition de liens avant l'obtention de l'exécutable, vers un module de conversion automatique d'adressage du genre librairie réalisant la conversion des adresses propres au réseau TCP/IP en adresses du réseau OSI-CO et permettant le passage du protocole TCP/IP vers le protocole OSI-CO, puis après conversion les appels sont transmis vers l'interface dite "XTI" pour être alors directement exploités dans le réseau OSI-CO, seuls les appels destinés au réseau TCP/IP étant traités, tout autre appel étant renvoyé vers le système.

Ainsi, grâce à l'invention une application tournant dans le monde TCP/IP pourra être également exploitée dans le monde OSI et ceci sans intervenir ou modifier le code source, ce qui est un énorme avantage pour les utilisateurs dont les développements restent identiques. Il suffit pour cela d'ajouter le module de conversion d'adressage qui sera utilisé juste au moment de la phase d'édition de liens (c'est-à-dire à la dernière étape de production de l'exécutable), à la fois du côté "client" et du côté "serveur" pour respecter la symétrie des protocoles et des adresses. Par conséquent, simplement en incorporant un module de conversion du type librairie correspondant à un ensemble de fonctions, qui est d'un faible coût, l'utilisateur peut exploiter son application automatiquement dans un autre monde de télécommunication.

Deux changements majeurs sont opérés. Un premier changement concerne l'interface, les appels sont déroutés, au moment de la phase d'édition de liens, de l'interface "socket" (fonctions points de communication) vers l'interface "XTI" (X/OPEN Transport Interface ) via le module de conversion d'adressage qui convertit les adresses. Le second changement qui est opéré simultanément concerne le protocole : passage du protocole TCP/IP au protocole OSI-CO. Seuls sont convertis et traités les appels de l'interface "socket" ainsi que les appels système ("read", "write", "close",...) destinés au réseau TCP/IP, les autres appels ne sont pas convertis et sont renvoyés vers le système (par exemple un appel concernant un ordre de lecture sur un fichier qui n'est pas du réseau TCP/IP). Une fois convertis, les appels sont utilisés dans le monde OSI par l'intermédiaire de l'interface "XTI". Le module de conversion est donc une librairie dont les différentes entrées reçoivent les divers appels qui doivent être convertis et traités. Pour préciser, prenons par exemple l'appel de fonction "socket", ce dernier réserve un descripteur de fichier et subit une vérification, si cet appel est bien destiné au réseau TCP/IP, c'est-à-dire correspond au mode prédéterminé (par exemple type SOCK_STREAM et famille AF_INET) il est converti et la connexion dans le monde OSI est réalisée, sinon il est redirigé vers la librairie TCP standard.

La description suivante en regard des dessins annexés, le tout donné à titre d'exemple non limitatif, fera bien comprendre comment l'invention peut être réalisée.

La figure 1 représente schématiquement le module de conversion d'adressage et son environnement ainsi que le trajet emprunté par les appels de l'interface "socket" et les appels système considérés.

La figure 2 propose un exemple de réalisation du module de conversion d'adressage selon l'invention.

La figure 3 présente un exemple de séquence de fonctions de transport en mode orienté connexion, utilisées d'une part figure 3.a, sur l'interface dite "Socket", et d'autre part, figure 3.b sur l'interface dite "XTI".

La figure 4 représente une table de correspondance entre les appels de fonction de l'interface dite "socket" et l'interface dite "XTI".

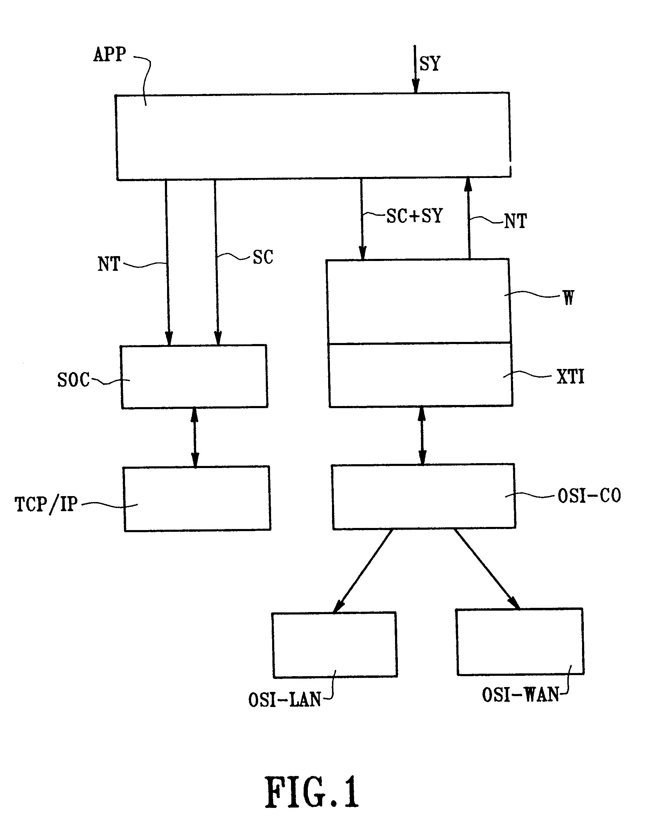

Sur la figure 1 est représentée le module de conversion d'adressage W selon l'invention dans son environnement. Le module W est une librairie qui est construite à l'instar d'une interface dont le premier objet est de recevoir, par l'intermédiaire de l'application APP du réseau TCP/IP, les appels SC de l'interface "socket" SOC ainsi que les appels système SY du genre lecture ("read"), écriture ("write"), fermeture ("close"), etc..., qui manipulent des descripteurs de fichiers et qui sont susceptibles de manipuler un descripteur de fichier "socket". Ces différents appels SC+SY sont ainsi déroutés vers le module W, au moment de la phase d'édition de liens avant l'obtention de l'exécutable. Le second objet du module W consiste à convertir de manière automatique les adresses propres au réseau TCP/IP en des adresses du réseau OSI-CO et à permettre le passage du protocole TCP/IP vers le protocole OSI-CO. Après conversion, les appels SC+SY destinés au réseau TCP/IP sont transmis vers l'interface "XTI" pour être directement exploités dans le réseau OSI-CO, c'est le troisième objet du module W. Tout appel NT qui n'est pas destiné au réseau TCP/IP, c'est-à-dire dont les arguments ne sont pas spécifiques de l'interface "socket", est renvoyé vers le système à la librairie TCP standard. Les appels SC+SY reçus par l'interface "XTI" sont ensuite transmis vers la pile du réseau OSI-CO puis vers les réseaux locaux OSI-LAN (dont le système de transmission a une architecture en bus ou en boucle) ou vers les réseaux étendus OSI-WAN. Les communications sont toujours établies pour des systèmes interconnectés à même niveau, les couches de transfert connaissant les adresses des différentes connexions.

Le module W fournit donc le moyen, pour des applications "orientées connexion" fonctionnant sur un réseau TCP/IP, de fonctionner de manière directe et automatique sur un réseau OSI-CO. Le module W conçu comme une librairie fournit une syntaxe et une sémantique propres à des appels de l'interface "socket", les mêmes syntaxe et sémantique nécessaires pour gérer des communications entre "client" et "serveur" selon le protocole TCP/IP mais utilisés ici selon un protocole OSI-CO pour accéder à un réseau OSI-CO.

De manière remarquable et avantageuse, lorsque l'appel de l'interface "socket" est destiné au réseau TCP/IP, c'est-à-dire correspond à un mode prédéterminé (type SOCK_STREAM et famille AF_INET), il est créé une ressource propre en mémoire pour conserver la trace de la connexion, l'interface "XTI" est alors appelée pour l'ouverture de ladite connexion, l'ensemble étant géré au moyen d'un arbre binaire de recherche. En effet, lorsque le nombre d'appels est important, ce qui est en général le cas, il est difficile de retrouver rapidement les informations propres aux connexions du module W s'il est utilisé une liste chaînée, aussi pour accélérer le processus il est utilisé un arbre binaire de recherche. De manière résumée et dans ces conditions, l'appel de la fonction "socket" ouvre un descripteur de fichier puis rend ce descripteur de fichier, et lorsque cet appel est reconnu destiné au réseau TCP/IP (reconnaissance du mode adéquat), au moment de l'ouverture de la connexion sont donnés les paramètres du descripteur de fichier qui a été rendu à l'interface "socket" et la recherche de l'environnement de cette connexion peut être réalisée au moyen de l'arbre binaire de recherche à partir de ce descripteur de fichier pour aboutir à la connexion au réseau OSI-CO avec des paramètres OSI. En outre, concernant l'adressage (qui est complètement transparent relativement à l'application) il suffit que soit générée, par exemple par l'administrateur du système, une table de conversion des adresses pour autoriser la conversion des adresses OSI (NSAP: Network Service Access Point) en adresses TCP/IP (Internet) et vice-versa. Par conséquent, l'utilisation d'un arbre binaire de recherche permet d'optimiser la recherche par l'intermédiaire d'une structure de séquences ordonnées à partir des informations destinées à l'interface "socket". De plus, le port ("socket") est transformé en sélecteur de transport (TSEL) et vice-versa.

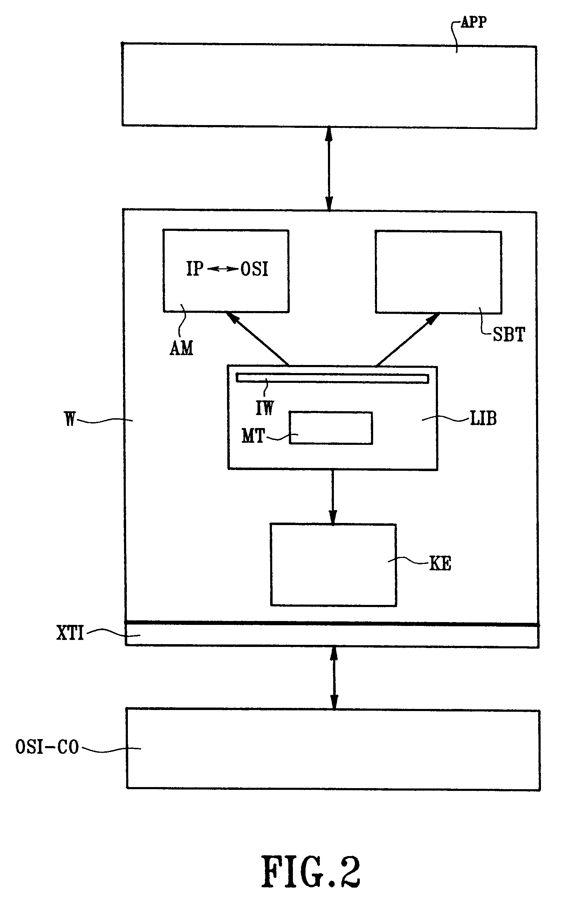

Sur la figure 2 est proposé un exemple de réalisation du module de conversion W selon l'invention.

Le module W est concu sous la forme d'une librairie qui assure le service d'interface entre l'application APP prévue pour être exploitée dans un réseau TCP/IP et les couches de communication OSI (réseau OSI) par l'intermédiaire de l'interface XTI, la première couche de communication accédée étant la couche de transport OSI, l'application APP pouvant être alors exploitée de manière transparente, sans modification du code source dans le réseau OSI-CO. Pour ladite application APP, tout se passe comme si elle continuait de dialoguer au travers du protocole TCP/IP.

Sur la figure 2, de manière remarquable, le module de conversion automatique d'adressage W est principalement constitué d'un premier sous-module LIB formant la librairie principale et contenant la table de correspondance MT entre les fonctions de communication TCP/IP et les fonctions de conversion incluses dans l'interface d'entrée IW du module W, d'un second sous-module AM de service de conversion d'adresses IP et OSI, d'un troisième sous-module SBT d'enregistrement des informations de connexion gérant lesdites informations au moyen d'un arbre binaire de recherche et d'un quatrième sous-module KE de service pour l'élaboration d'un ensemble spécifique d'extensions au système.

Le premier sous-module LIB comporte donc la table ou plan de correspondance MT entre les fonctions de communication utilisées dans un réseau TCP/IP et les fonctions de conversion intégrées dans l'interface d'entrée IW du module W. La table MT fournit avantageusement une correspondance bijective, telle qu'à toute fonction de communication TCP/IP par l'intermédiaire du mécanisme des "sockets" (décrit dans, "UNIX Networking Programming" - de Richard W. STEVENS chez Prentice Hall), il existe une fonction et une seule dans l'interface IW qui exécute le service (ou la requête) demandé par l'application APP, le nom des appels, le nombre des arguments de paramètres d'un appel, la sémantique et l'enchaînement des appels étant exactement conservés.

De manière préférée, le second sous-module AM de service de conversion d'adresses forme également une librairie et effectue la conversion entre d'une part les adresses IP comportant l'adresse réseau de la machine concernée et le port relatif au service accédé et d'autre part les adresses OSI comportant le point d'accès de service du réseau (NSAP) et le sélecteur de transport (TSEL), ladite conversion pouvant être effectuée dans les deux sens, adresses IP vers adresses OSI ou adresses OSI vers adresses IP.

De manière également préférée, le troisième sous-module SBT d'enregistrement des informations de connexion gérées par un arbre binaire de recherche fournit un service indépendant (disponible comme une boîte noire) sous la forme d'une librairie permettant d'enregistrer, trier, rechercher et supprimer de façon optimale tous les éléments d'information significatifs relatifs à une connexion donnée.

Enfin le quatrième sous-module de service permet d'élaborer un ensemble spécifique d'extensions au système pour rediriger et renvoyer, dans le cadre du mécanisme des "sockets" et par l'intermédiaire du noyau système, les appels de télécommunications non destinés au réseau TCP/IP et qui ne sont donc pas convertis par le module de conversion, vers la librairie TCP standard.

Ce quatrième sous-module autorise ainsi la plus parfaite portabilité de l'application APP. En effet, lorsque des appels sont détectés non destinés au réseau TCP/IP ne correspondant pas au type SOCK_STREAM et à la famille AF_INET, ils ne doivent pas être pas être traités et donc convertis par le module W, aussi ils sont redirigés vers le système par le biais d'extensions au noyau du système qui permettent de rappeler la librairie TCP Standard.

Le mécanisme général est le suivant. L'application APP transmet un appel au module W chaque fois qu'un des appels de fonction suivants est lancé:
- "socket", qui crée une extrémité de connexion pour une communication,
- "bind" qui affecte un nom pour référencer l'extrémité de connexion de la communication,
- setsockopt/getsockopt" qui sélectionne/lit des options sur une extrémité de connexion de la communication,
- "getsockname" qui lit l'adresse courante pour une extrémité de connexion spécifiée,
- "listen" qui spécifie le nombre de connexions entrantes possibles simultanées,
- "connect" qui émet une requête pour une connexion vers une extrémité de connexion locale,
- "accept" qui attend et accepte une connexion entrante,
- "send" qui transmet un message entre extrémités de connexion de même niveau,
- "recv" qui lit un message transmis d'une extrémité de connexion éloignée vers une extrémité de connexion locale,
- "shutdown" qui ferme partiellement une connexion bidirectionnelle (full-duplex).

Cependant comme il n'y a pas bijection entre les appels de l'interface "socket" et les fonctions de l'interface XTI, il est nécessaire de trouver un moyen pour les faire correspondre. Pour cela quatre phases de communication sont parcourues, une première d'initialisation/"désinitialisation" des extrémités de connexion pour la communication, une seconde pour l'établissement de la connexion, une troisième pour la transmission des données et une quatrième pour la déconnexion.

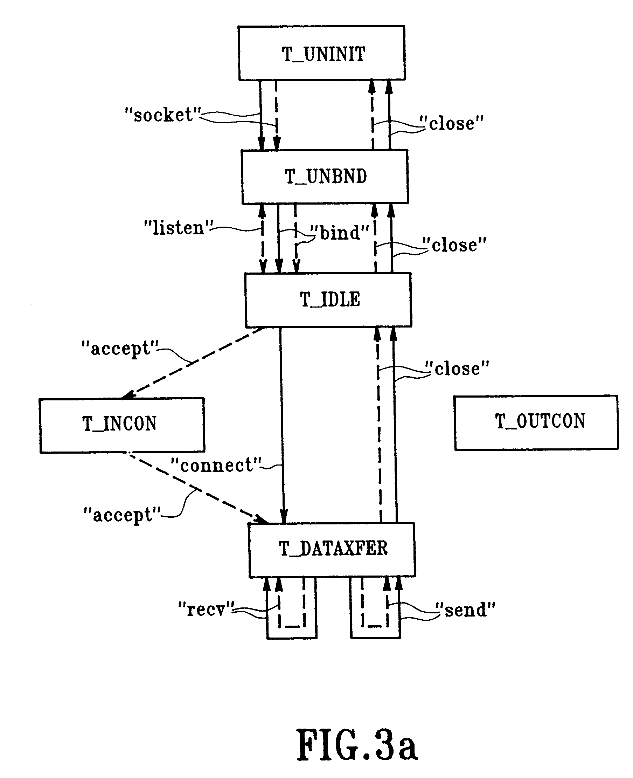

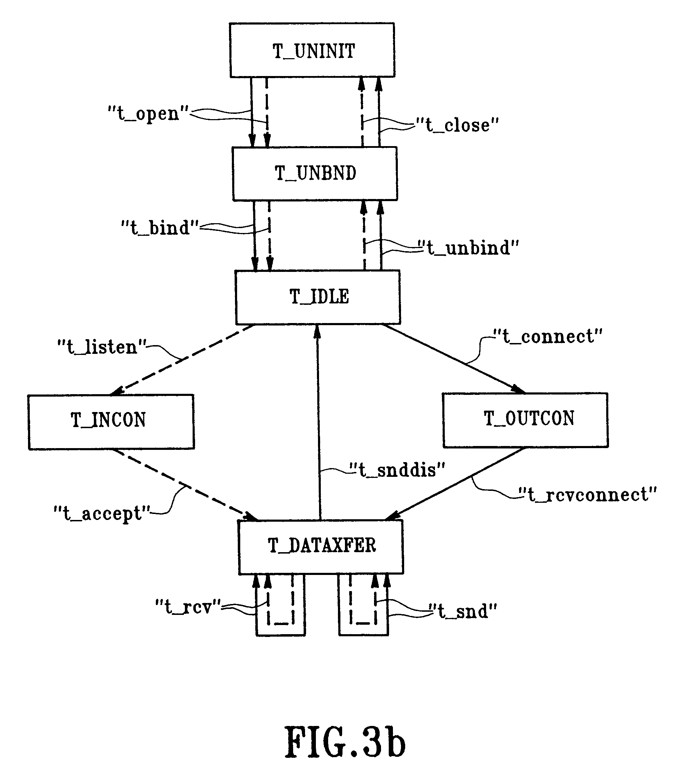

Sur la figure 3 est proposé un exemple de séquence de fonctions de transport en mode orienté connexion, utilisées d'une part figure 3.a, sur l'interface "socket" et d'autre part figure 3.b, sur l'interface XTI de manière à comparer et préciser les deux mécanismes. Les mécanismes sont décrits et comparés en parallèle fonction par fonction dans les quatre phases de communication précédemment citées.

Sur la figure 3.a, les flèches en trait plein sont représentatives d'un processus "client" alors que les flèches en trait pointillé le sont d'un processus "serveur".

Sur la figure 3.b, les flèches en trait plein sont représentatives d'un processus "utilisateur actif", alors que les flèches en trait pointillé le sont d'un "utilisateur passif".

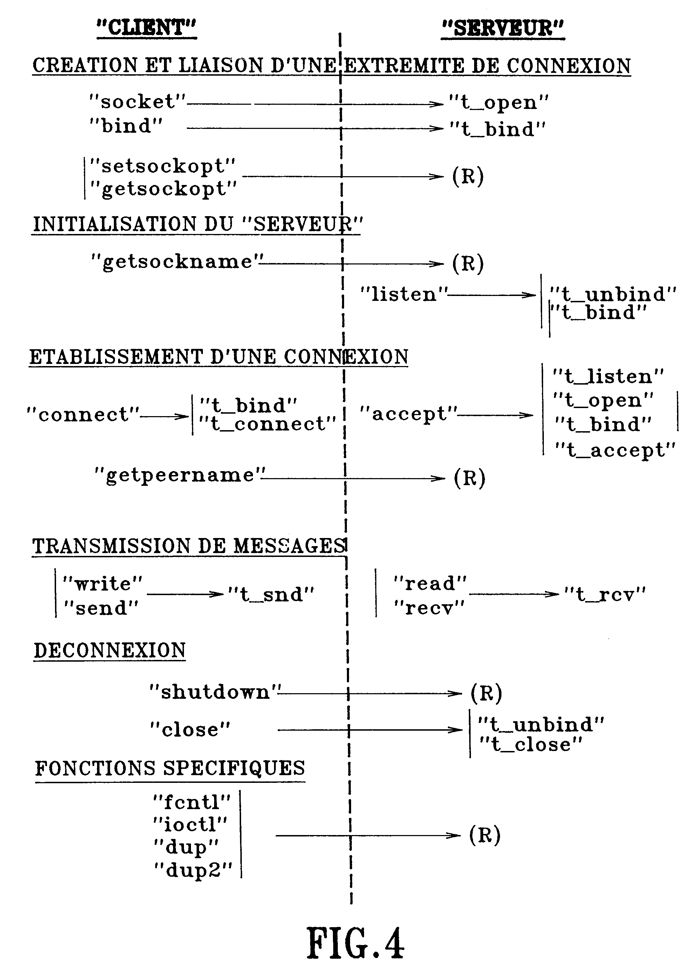

Les figures 3a et 3b, seront lues, pour une meilleure appréhension, en combinaison avec la figure 4 sur laquelle est représentée une table de correspondance entre les appels de l'interface dite "socket" (côté "client") et l'interface dite "XTI" (côté "serveur"). Lorsque des appels de l'interface dite "socket" n'ont pas de correspondance sur l'interface "XTI", des routines d'interface spécifiques sont utilisées, ces routines sont représentées par la lettre (R) sur la figure 4.

Ainsi dans la première phase d'initialisation/"désinitialisation", au tout début l'état non initialisé est appelé T_UNINIT.

Lors d'un appel de fonction "socket" de l'interface "socket", une extrémité de connexion pour la communication est créée alors qu'est fourni un identificateur de transport. Pour cela, l'appel de l'interface "socket" (conforme à la famille AF_INET) contient le domaine spécifié (par exemple Internet), le type spécifié (par exemple type SOCK_STREAM), le protocole spécifié (par exemple TCP). Les valeurs de retour de l'appel "socket" sont, soit un nombre entier équivalent au descripteur de fichier, soit (-1) lorsqu'il est constaté une erreur.

La fonction correspondante en mode XTI-CO est "t_open", elle permet d'établir une extrémité de connexion d'une part en fournissant un identificateur de transport qui indique un protocole particulier de transport et d'autre part en retournant un descripteur de fichier qui identifie une extrémité de connexion. C'est la première étape de l'initialisation d'une extrémité de connexion de transport (état T_UNINIT vers état T_UNBND extrémité de connexion non attachée à une adresse). Cette fonction contient le nom spécifié, un drapeau spécifié et la structure de l'information fournie. Les valeurs de retour sont, soit le descripteur de fichier concerné, soit la valeur (-1) en cas d'erreur.

Le descripteur de fichier retourné par la fonction "t-open" sera utilisé pour tout appel subséquent pour identifier cette extrémité de connexion locale particulière. Et, de manière à suivre l'extrémité de connexion pour la communication à travers la séquence d'appels de fonctions de transport, chaque descripteur de fichier créé sera stocké dans un arbre binaire de recherche. Cette structure contiendra également d'autres informations telles que l'adresse du réseau, le numéro du port TCP qui identifie le service requis ainsi que tout autre élément d'information nécessaire.

Un appel de fonction "bind" permet d'associer un appel "socket" à une adresse affectée en reliant une adresse à une extrémité de connexion de transport. L'appel "bind" (conforme à la famille AF-INET) contient le retour de l'appel "socket" spécifié (domaine, type, protocole), le nom de l'adresse spécifiée, la taille de l'adresse. Les valeurs de retour de l'appel "bind" sont, soit (0) si l'appel a abouti, soit (-1) en cas d'erreur.

La fonction correspondante en mode XTI-CO est "t_bind". C'est la seconde étape dans l'initialisation d'une extrémité de connexion de transport (état T_UNBND vers état T_IDLE, état non connecté mais déjà attaché à une adresse). Elle permet d'une part d'associer une adresse de protocole à l'extrémité de connexion de transport spécifiée par le descripteur de fichier et d'autre part d'activer cette extrémité de connexion de transport. Elle contient l'extrémité de connexion de transport spécifiée (descripteur de fichier), l'adresse de protocole spécifiée. Les valeurs de retour sont, soit (0) si l'appel a abouti, soit (-1) en cas d'erreur.

Un appel de fonction "setsockopt" permet de sélectionner des options pour l'appel "socket" en gérant les options pour une extrémité de connexion de transport. L'appel "setsockopt" (conforme à la famille AF_INET) contient le retour de l'appel "socket" spécifié (domaine, type, protocole), le niveau spécifié, le nom de l'option spécifié, la valeur d'accès de l'option et la taille de l'option. Les valeurs de retour de l'appel "setsockopt" sont, soit (0) si l'appel a abouti, soit (-1) en cas d'erreur.

Chaque option est émulée indépendamment des autres lorsque ladite émulation est possible. Différentes options peuvent être de la sorte sélectionnées, les principales concernent par exemple:
- la mise au point (SO_DEBUG),
- le maintien actif (SO_KEEPALIVF),
- la réutilisation d'une adresse (SO_REUSEADDR),
- la fermeture différée si des données sont en attente d'émission (SO_LINGER),
- l'enregistrement de la taille requise du tampon en réception (SO_RCVBUF),
- l'enregistrement de la taille requise du tampon en émission (SO_SNDBUF),
- la réception des données express dans le flot de données normales (SO_OOBINLINE).

Toute autre option peut être bien entendu sélectionnée.

Un appel de fonction "getsockopt" permet d'accéder aux options pour l'appel "socket" et de retrouver des options sélectionnées pour une extrémité de connexion donnée. L'appel "getsockopt" (conforme à la famille AF_INET) contient le retour de l'appel "socket" spécifié (domaine, type, protocole), le niveau spécifié, le nom de l'option spécifié, la valeur d'accès de l'option et la taille de l'option. Les valeurs de retour de l'appel "getsockopt" sont, soit (0) si l'appel a abouti, soit (-1) en cas d'erreur.
Pour émuler une lecture d'options d'appel "socket", une recherche du descripteur de fichier propre à cet appel "socket" est exécutée en utilisant l'arbre binaire de recherche. Puis les options spécifiées sont extraites de la structure d'informations désignée par le numéro du descripteur de fichier de l'appel "socket".

Un appel de fonction "getsockname" permet d'accéder au nom courant d'un appei "socket" et de retrouver, pour une extrémité de connexion de transport donnée, le point d'accès service du réseau (NSAP) et le sélecteur de transport (TSEL). L'appel "getsockname" (conforme à la famille AF_INET) contient le retour de l'appel "socket" spécifié (domaine, type, protocole), le nom de l'appel spécifié et la taille du nom de l'appel spécifié. Les valeurs de retour de l'appel "getsockname" sont, soit (0) si l'appel a abouti, soit (-1) en cas d'erreur.

Une table structurée, organisée à l'instar d'un arbre binaire de recherche, est consultée pour extraire l'adresse Internet et le port INET correspondant au descripteur indiqué. Le numéro du port et l'adresse Internet sont toujours retournés.

Un appel de fonction "listen", permet à un "serveur" de spécifier le nombre de connexions entrantes possibles simultanées sur une entrée déterminée, le "serveur" signifiant son acceptation des requêtes des connexions entrantes sur une extrémité de connexion de transport donnée (en spécifiant les limites concernant la file d'attente pour les connexions en attente d'acceptation). L'appel "listen" (conforme à la famille AF_INET) contient le retour de l'appel "socket" spécifié (domaine, type, protocole) et la taille de la file d'attente spécifiée (la longueur maximum de cette file d'attente de connexions en attente d'acceptation). Il est à remarquer que les entrées (ou ports) de l'interface "socket" non reliées seront automatiquement reliées par le système. Dans ce cas, le nom et le numéro de port peuvent être retrouvés en utilisant la fonction "getsockname". Les valeurs de retour de l'appel "listen" sont, soit (0) si l'appel a abouti, soit (-1) en cas d'erreur.

Les fonctions correspondantes à la fonction "listen" en mode XTI-CO sont "t_unbind" et "t_bind".La fonction t_unbind" est d'abord exécutée, c'est la troisième étape dans l'initialisation d'une extrémité de connexion de transport (état T_IDLE vers état T_UNBND). La fonction "t_unbind" permet de désactiver l'extrémité de connexion de transport qui avait été auparavant reliée par l'intermédiaire de la fonction "t_bind". Elle contient l'extrémité de connexion de transport spécifiée (descripteur de fichier). Les valeurs de retour sont, soit la valeur (0) si l'appel a abouti, soit la valeur (-1) en cas d'erreur.
La fonction "t_bind" est ensuite exécutée, c'est alors la dernière étape dans l'initialisation d'une extrémité de connexion de transport (état T_UNBND vers état T_IDLE). La fonction "t_bind" permet d'assurer la liaison automatique et systématique d'un descripteur de fichier non relié. Elle contient l'extrémité de connexion de transport spécifiée (descripteur de fichier) et l'adresse de protocole spécifiée. Il est précisé également le nombre de connexions simultanées qu'il est permis de supporter pour l'extrémité de connexion de transport donnée. Les valeurs sont, soit la valeur (0) si l'appel a abouti, soit la valeur (-1) en cas d'erreur.

Si le descripteur de fichier n'est pas trouvé dans la structure de recherche, l'appel est redirigé vers la librairie TCP standard. Sinon, par principe, l'extrémité de connexion de transport est systématiquement déliée, de manière à prendre en compte le nombre maximum de connections en attente autorisées. Cependant il peut se trouver que l'extrémité de connexion de transport ne possède pas d'adresse de liaison, dans ce cas cette extrémité est laissée non reliée.

En outre, une nouvelle liaison doit être exécutée en tenant compte du nombre de connexions requis par le "serveur" (le nombre maximal de connexions est négocié en considérant le nombre de connexions qu'il est possible de supporter).

Pour résumer cette phase d'initialisation/"désinitialisation", la création est réalisée au moyen de la fonction "socket", la liaison à une adresse au moyen de la fonction "bind" et la sélection du nombre maximum de connexions entrantes simultanées ("serveur") au moyen de la fonction "listen".

Dans la seconde phase dite d'établissement de la connexion, l'appel de fonction "connect" est utilisé pour obtenir du "serveur" une connexion en permettant à un utilisateur du transport de demander une connexion à une extrémité de connexion de transport déterminée. L'appel "connect" (conforme à la famille AF_INET) contient, le retour de l'appel "socket" local spécifié (domaine, type, protocole), le nom de l'adresse spécifiée et la taille de l'adresse spécifiée. Comme pour l'appel de fonction "listen", le système automatiquement sélectionne et relie l'adresse locale au port concerné si cette dernière n'est pas reliée (l'adresse restant reliée quoiqu'il arrive). Les valeurs de retour de la fonction "connect" sont, soit la valeur (0) lorsque l'appel a abouti, soit la valeur (-1) en cas d'erreur.

Les fonctions correspondantes à la fonction "connect" en mode XTI-CO sont "t_bind" et "t_connect". La fonction "t_bind" est d'abord exécutée, c'est la première étape d'établissement de la connexion d'une extrémité de connexion de transport (état T_UNBND vers état T_IDLE). La fonction "t_bind" permet de relier une adresse à un descripteur de fichier si celui-ci est trouvé non relié. Elle contient l'extrémité de connexion de transport spécifiée (descripteur de fichier), l'adresse de protocole spécifiée. Les valeurs de retour sont, soit la valeur (0) si l'appel a abouti, soit la valeur (-1) en cas d'erreur.

La fonction "t_connect" est ensuite exécutée, c'est la seconde étape d'établissement de la connexion d'une extrémité de connexion de transport (état T_IDLE vers état T_OUTCON (en phase de connexion sortante) ou vers état T_DATAXFER (en mode connecté, transfert des données) si le mode est synchrone). La fonction "t_connect" permet de demander une connexion vers une extrémité de connexion de transport distante. Elle contient 1' extrémité de connexion de transport spécifiée (descripteur de fichier pour l'ouverture d'une extrémité de connexion de transport locale où la communication sera établie), l'adresse de protocole spécifiée (pour indiquer l'information nécessaire à l'établissement de la connexion et l'information qui est associée à la nouvelle connexion à établir). Les valeurs de retour sont, la valeur (0) si l'appel a abouti, ou la valeur (-1) en cas d'erreur. Il est à noter que l'utilisateur peut, dans le présent cas, définir différentes options, il peut également choisir de ne pas négocier les options en sélectionnant une taille d'option égale à zéro.

Si le descripteur de fichier du "client" n'est pas trouvé dans l'arbre binaire de recherche, l'appel est redirigé vers le noyau. Les autres erreurs sont traitées en utilisant une procédure de reconnaissance d'erreurs vérifiant la validité de chaque argument (type, valeur, etc..), les erreurs spécifiques étant gérées par ladite fonction en mode XTI-CO.

Ensuite, l'état de la connexion est automatiquement vérifié par l'interface "XTI" lors d'un appel de fonction "t_connect". L'état T_IDLE est formellement exigé, tout autre état entraîne l'émission d'une erreur indiquant que la fonction a été émise lors d'une séquence erronée.

Les informations utilisées pour spécifier un paramètre d'émission d'appel sont directement retrouvées à partir du nom et de la taille du nom de l'appel de fonction "connect". En particulier, le nom contient le port du service distant et l'adresse de l'hôte distant (le descripteur de fichier est la seule référence locale).

Le format d'adresse de l'interface "socket" est converti en une adresse requise par l'interface XTI. Dans tous les cas où cela est nécessaire, le point d'accès service de réseau (NSAP) local sera retrouvé en consultant dans le fichier de conversion d'adresses, l'adresse correspondante de la machine du réseau OSI. L'adresse du protocole OSI sera générée en concaténant l'adresse de l'hôte distant et le sélecteur distant, suivant la structure OSI des adresses requises par l'interface XTI. Il y a accès à l'adresse distante, qui a été liée à l'extrémité de connexion de transport distante, par le "serveur". L'adresse de protocole qui est associée à l'extrémité de connexion de transport de l'utilisateur passif est retournée. En outre, si la valeur du sélecteur de transport (TSEL) distant fournie par le "serveur" pour réaliser la connexion est différente de la valeur requise par le client, une erreur est émise.

A ce stade, c'est-à-dire au moment où le "serveur" accepte la requête de connexion, aucune donnée n'est encore reçue.

Un appel de fonction "accept" est utilisé par le "serveur" pour attendre et accepter une connexion d'un "client" sur une entrée de l'interface "socket" repérée en attente de réception. Le "serveur" extrait la première connexion de la file d'attente et crée une nouvelle entrée "socket" (si la longueur de la file d'attente est supérieure à 1), l'appel est bloqué jusqu'à ce que la connexion soit établie à moins que cet appel soit repéré comme non-bloquant. L'appel "accept" (conforme à la famille AF_INET) contient, le retour de l'appel "socket" local spécifié (domaine, type, protocole), le nom de l'adresse spécifiée (l'argument adresse est un paramètre de retour qui est rempli avec l'adresse de l'entité "client" se connectant) et la taille de l'adresse spécifiée. Il est à remarquer que la séquence d'arguments est identique à celles des appels "bind", "getsockname" et "connect", mais l'argument adresse est un argument de sortie. En outre, si aucune connexion en attente n'est présente dans la file d'attente et que l'appel est repéré bloquant, l'appel "accept" bloque le demandeur jusqu'à ce qu'une connexion soit présente. Si l'appel est repéré non-bloquant et qu'aucune connexion n'est présente sur la file d'attente, l'appel "accept" retourne une erreur. Les valeurs de retour sont, l'adresse du client, la taille réelle de l'adresse retournée avec les mêmes propriétés d'argument "socket" incluant les ports reliés et le descripteur de fichier d'une nouvelle entrée "socket" si l'appel a abouti, sinon la valeur (-1) en cas d'erreur.

Les fonctions correspondantes à la fonction "accept" en mode XTI-CO sont "t_listen", "t_open", "t_bind" et "t_accept". La fonction "t_listen" est d'abord exécutée, ce qui correspond à l'étape du passage de l'état T_IDLE à l'état T_INCON (attente de connexion entrante). La fonction "t_listen" permet d'attendre en vue d'accepter une requête de connexion venant d'un utilisateur de transport. Elle contient l'extrémité de connexion de transport spéficiée (descripteur de fichier) identifiant l'extrémité de connexion de transport distante où arrivent les indications de connexion émises par l'utilisateur actif. Elle contient également l'adresse de protocole spécifiée pour récupérer l'information qui est associée à la connexion nouvellement établie. La taille maximum de l'adresse, des options et des données doit être sélectionnée avant l'émission de l'appel "t_listen" pour indiquer la taille maximum de chaque tampon. Les valeurs de retour sont, soit la valeur (0) si l'appel a abouti, soit la valeur (-1) en cas d'erreur. Il est à noter que l'utilisateur peut mettre en attente une pluralité d'indications de connexion avant de répondre à l'une d'entre elles.

La fonction "t_open" est ensuite exécutée dans le cas du passage de l'état T_UNINIT vers l'état T_UNBND pour créer un nouveau descripteur de fichier de communication.

La fonction "t_bind" est alors exécutée pour référencer l'adresse du nouveau descripteur de fichier de communication lors du passage de l'état T_UNBND vers l'état T_IDLE (avec la même adresse de protocole et avec une longueur nulle de file d'attente).

La fonction "t_accept" est enfin exécutée, c'est la dernière étape de la phase d'établissement de la connexion (état T_INCON vers état T_DATAXFER). La fonction "t_accept" est émise par un utilisateur de transport passif pour accepter une requête de connexion venant d'un utilisateur actif identifié. Elle contient l'extrémité de connexion de transport du service spécifiée (descripteur de fichier du "serveur") qui identifie l'extrémité de connexion de transport distante où les indications de connexion sont prélevées par l'utilisateur passif. Elle contient aussi le nouveau descripteur de fichier de communication qui spécifie l'extrémité de connexion de transport locale différente où le transfert de données doit être établi. Elle contient enfin l'adresse de protocole spécifiéee pour préciser l'information demandée par le fournisseur de transport pour achever la connexion nouvellement établie. Les valeurs de retour sont, soit la valeur (0) lorsque l'appel a abouti, soit la valeur (-1) en cas d'erreur.

Indépendamment de la procédure usuelle relative à la vérification du descripteur de fichier, avant de générer un événement "t-listen", l'état de connexion du descripteur de fichier du "serveur" est vérifié. L'état T_IDLE est alors absolument requis, sinon une erreur apparaît indiquant que la fonction a été émise lors d'une séquence erronée.

Avant de générer un événement "t_accept", l'état de connexion de l'extrémité locale n'est pas vérifié.

Dans le cas d'une extrémité de connexion du côté "serveur", la fonction "t_accept" ne peut aboutir et impose la valeur ((-1), erreur) lorsqu'il existe des indications (de connexion ou de déconnexion) attendant d'être reçues sur cette extrémité de connexion particulière.

En retour d'un appel "t_accept", comme l'argument adresse est un paramètre résultat de l'appel "t_accept", il est rempli avec l'adresse de l'entité distante à connecter. Ensuite cette adresse est associée au descripteur de fichier. De même, la taille de l'adresse est également un paramètre résultat de l'appel "t_accept", cette dernière contient initialement la taille de l'espace désigné par l'adresse mais en retour de l'appel "t_accept" elle contiendra la taille réelle de l'adresse retournée.

Finalement, suite à l'appel de fonction "accept", un nouveau descripteur de fichier de communication est retourné, il correspond à la nouvelle entrée "socket" disponible.

Un appel de fonction "getpeername" est utilisé lorsque "client" ou "serveur" veut connaître le nom de l'entité de communication de même niveau, l'utilisateur actif ou passif désirant obtenir le nom de l'extrémité de connexion distante auquel il est connecté. L'appel "getpeername" (conforme à la famille AF_INET) contient le retour de l'appel "socket" local spécifié (domaine, type, protocole), l'adresse spécifiée (l'argument adresse étant un paramètre résultat qui est donné avec l'adresse de l'entité de même niveau se connectant) et la taille de l'adresse spécifiée. Il est à noter que la séquence d'arguments est identique à celles des fonctions "bind", "getsockname", "connect" et "accept" mais que l'argument adresse est un argument de sortie. Les valeurs de retour sont soit l'adresse du client, la taille réelle de l'adresse retournée et la valeur (0) si l'appel a abouti, soit la valeur (-1) en cas d'erreur.

En fait, l'échange du nom de l'adresse est effectué lorsque l'utilisateur passif accepte (fonction "accept") la requête de connexion (fonction "connect") de l'entité de même niveau. Cette adresse est alors décodée. Le nom de l'entité se connectant, ainsi converti, est maintenu dans la liste des descripteurs de fichiers de l'arbre binaire de recherche où il est associé avec le nouveau descripteur de fichier qui a été créé pour la communication. De cette manière, l'utilisateur passif peut toujours connaître l'entité de même niveau distante (l'information est simplement lue).

Pour résumer les phases précédentes, la création est réalisée au moyen de la fonction "socket", la liaison à une adresse au moyen de la fonction "bind" et la connexion est demandée par l'intermédiaire de la fonction "connect" et acceptée par l'intermédiaire de la fonction "accept".

Dans la troisième phase dite de transmission de données, l'appel de fonction "send" est utilisé pour transmettre des données selon un canal virtuel au travers des ports de l'interface "socket" connectés, autorisant ainsi l'utilisateur du transport à envoyer un flot de données normales ou un flot de données express au travers de connexions réalisées. La fonction "send" ne peut être utilisée que lorsque le port concerné de l'interface "socket" est effectivement connecté. L'appel "send" (conforme à la famille AF_INET) contient le retour de l'appel "socket" local spécifié (domaine, type, protocole), le message spécifié (une unité de caractères étant définie comme une chaîne), la taille spécifiée de l'unité de données à transmettre et les drapeaux spécifiés (un drapeau étant un paramètre qui indique une commande spéciale concernant la transmission du message, par exemple pour l'envoi de données hors-bande, ou des données envoyées sans table d'acheminement,...).

Il est à noter que si aucun espace n'est disponible dans les tampons de l'interface "socket" pour conserver le message à transmettre, alors l'émission est bloquée à moins que l'interface "socket" n'ait été placée dans un mode d'entrée/sortie non bloquant. Ensuite il peut être déterminé le moment où il est possible d'envoyer de nouveau des données.

Les valeurs de retour de la fonction "send" sont, soit le nombre de caractères envoyés si l'appel a abouti, soit la valeur (-1) en cas d'erreur.

La fonction correspondante en mode XTI-CO est "t_snd" c'est l'état T_DATAXFER qui subsiste jusqu'à ce qu'une requête de déconnexion soit émise par un utilisateur actif ou reçue par un utilisateur passif. Elle permet d'envoyer, à travers une connexion, un flot de données normales ou un flot de données express. Elle contient l'extrémité de connexion de transport spécifiée (descripteur de fichier) identifiant l'extrémité de connexion de transport locale à partir de laquelle les données sont émises, le tampon de données spécifié (unité de données définie comme un pointeur d'une chaîne), la taille du tampon spécifiée (le nombre d'octets des données utilisateur à envoyer) et les drapeaux spécifiés (incluant toute option). Il est à noter qu'un drapeau sélectionnant le flot de données express signifie que les données sont envoyées à cette vitesse et l'interprétation est faite par le fournisseur de transport. Egalement, un drapeau peut indiquer que les unités de données sont envoyées par l'intermédiaire d'une séquence d'appels "t_snd" multiple. La fin de données est identifiée par l'appel "t_snd" avec ce même dernier drapeau non sélectionné. Cela permet à un utilisateur de décomposer de grandes unités de données logiques. Les valeurs de retour sont, soit le nombre d'octets accepté par le fournisseur de transport si l'appel a abouti, soit la valeur (-1) en cas d'erreur (indiquant l'impossibilité de transmettre les données).

Dans le cas où le descripteur de fichier de l'utilisateur n'est pas trouvé dans l'arbre binaire de recherche, l'appel est redirigé vers la librairie TCP standard.

L'état de connexion du descripteur de fichier est vérifié. L'état T_DATAXFER est absolument requis, tout autre état entraîne l'émission d'une erreur indiquant que la fonction a été émise lors d'une séquence erronée.

Normalement, le nombre d'octets envoyés est égal au nombre d'octets spécifié dans la taille spécifiée. Cependant, si le mode d'entrée/sortie non bloquant est sélectionné, il est possible que seule une partie des données soit réellement acceptée par le fournisseur de transport. Dans ce cas, l'appel "t_snd" retourne une valeur indiquant un nombre d'octets inférieur à la taille spécifiée.

L'appel de fonction "recv" est utilisé pour recueillir les données entrantes sur les ports connectés de l'interface "socket" sur un canal virtuel en autorisant un utilisateur de transport, à recevoir sur une connexion, un flot de données émis à vitesse normale ou express. L'appel "recv" ne peut être utilisé que lorsque, les ports concernés de l'interface "socket" sont connectés. L'appel "recv" (conforme à la famille AF_INET) contient le retour de l'appel "socket" local (domaine, type, protocole), l'adresse du tampon spécifiée où les données doivent être placées, la taille du tampon de réception de données (si un message est trop long pour tenir dans le tampon donné, les octets en excès peuvent être supprimés selon le type de port de l'interface "socket" duquel provient le message) et les drapeaux spécifiés (paramètres indiquant une commande spéciale concernant la transmission du message, mêmes paramètres que ceux présentés avec l'appel "send"). Les mêmes arguments sont utilisés avec les appels "send" et "recv". L'argument drapeau dans un appel "recv" est formé par la réunion logique d'une ou plusieurs valeurs. Il est à noter que si aucun message n'est disponible sur un port de l'interface "socket", l'appel "recv" attend qu'un message arrive à moins que l'interface "socket" n'ait été placée en mode non-bloquant, en tel cas une valeur (-1) est retournée. Les valeurs de retour de l'appel "recv" sont, soit le nombre d'octets reçus si l'appel a abouti, soit la valeur (-1) en cas d'erreur.

La fonction correspondante en mode XTI-CO est "t_rcv". Même situation qu'avec l'appel "t_snd" c'est l'état T_DATAXFER qui subsiste jusqu'à ce qu'une requête de déconnexion soit émise par un utilisateur actif ou reçue par un utilisateur passif. Elle permet de recevoir sur une connexion un flot de données normales ou un flot de données express. Elle contient l'extrémité de connexion de transport spécifiée (descripteur de fichier) identifiant l'extrémité de connexion de transport locale par laquelle les données arrivent, le tampon de réception spécifié où sont reçues les données utilisateur, la taille du tampon de réception (nombre d'octets). Les valeurs de retour sont, soit les valeurs sélectionnant les drapeaux et spécifiant les drapeaux optionnels, ainsi que le nombre d'octets reçus par le fournisseur de transport si l'appel a abouti, soit la valeur (-1) en cas d'erreur.

Si le descripteur de fichier n'est pas trouvé dans l'arbre binaire de recherche, l'appel est redirigé vers la librairie TCP standard.

L'état de connexion du descripteur de fichier est vérifié. L'état T_DATAXFER est absolument requis, tout autre état entraîne l'émission d'une erreur indiquant que la fonction a été émise lors d'une séquence erronée.

En retour à l'appel "t_rcv", si, est sélectionné un drapeau indiquant que d'autres données sont à recevoir, les unités de données de service de transport courantes émises sur le flot de données normales ou sur le flot de données express (selon un second drapeau sélectionné) doivent être reçues au moyen d'appels "t_rcv" multiples. Chaque appel "t_rcv", avec le drapeau sélectionné, indique qu'un autre appel "t_rcv" suit immédiatement pour fournir de nouvelles données pour l'unité de données courante et, ceci autant de fois qu'il est nécessaire pour recevoir toutes les données. La fin de cette unité de données est identifiée par le retour de l'appel "t_rcv" lorsque le drapeau n'est plus sélectionné.

Si un flot de données express (sélection du drapeau prévu à cet effet) arrive après qu'une partie d'un flot de données normales ait été reçue, la partie restante de ce flot de données normales ne sera pas reçue tant que l'ensemble du flot de données express n'aura pas été traité.

L'appel système de fonctions standards "read" ou "write" fournit un autre moyen d'envoyer ou recevoir un flot de données normales ou un flot de données express vers une connexion donnée. Les appels "read" ou "write" contiennent le descripteur de fichier spécifié (qui est ouvert et se réfère à un flot de données (STREAM)), le tampon spécifié et la taille du tampon spécifié.

Les fonctions correspondantes en mode XTI-CO sont respectivement "t_snd" et "t_rcv" telles que décrites précédemment.

Avec une entité de même niveau à chaque extrémité de la connexion, un utilisateur peut envoyer ou recevoir des données sans spécifier l'entité de même niveau. Grâce à cela, les appels "write" ou "read" standards peuvent être utilisés sans inconvénient.

Il est à remarquer qu'il existe la même correspondance entre "read" et "t_rcv" qu'entre "recv" et "t_rcv" et entre "write et "t_snd" qu'entre "send" et "t_snd". Par conséquent, un appel "read" standard peut être exécuté quand le descripteur de fichier n'appartient pas à la liste des descripteurs de fichiers gérée dans l'arbre binaire de recherche. D'autre part, les arguments relatifs aux drapeaux sont sans utilité et sont toujours forcés à la valeur 0.

Les valeurs de retour sont pour l'appel "read" le nombre d'octets reçus et pour l'appel "write" le nombre de caractères envoyés lorsque ces appels ont abouti et la valeur (-1) en cas d'erreur.

Dans la quatrième phase dite de "déconnexion", l'appel système de fonction standard "shutdown" est utilisé pour faire cesser l'émission et/ou la réception de données à travers un canal virtuel, il est ainsi permis à l'utilisateur de transport d'interrompre la transmission de données vers une connexion. La fonction "shutdown" ne peut être utilisée que lorsque le port concerné de l'interface "socket" est effectivement connecté. Cette fonction provoque donc la fermeture totale ou partielle d'une connexion bilatérale et "full-duplex" entre le port de l'interface "socket" concerné et la terminaison associée de ladite connexion. L'appel "shutdown" (conforme à la famille AF_INET) contient le retour de l'appel "socket" local spécifié (domaine, type, protocole) et la direction spécifiée de circulation de données, un argument de valeur O signifiant que la réception est interrompue, un argument de valeur 1 que l'émission est interrompue et un argument de valeur 2 que l'émission et la réception sont interrompues. Les valeurs de retour de l'appel "shutdown" sont, soit la valeur 0 si l'appel a abouti, soit la valeur (-1) en cas d'erreur.

Lorsque la fonction "shutdown" est exécutée sur un port de l'interface "socket", toutes les données mises en attente sont immédiatement supprimées. Aussi, généralement l'utilisateur qui n'utilise pas les données en attente peut exécuter un appel "shutdown" sur un port déterminé de l'interface "socket" avant de le refermer.

Si le descripteur de fichier de l'utilisateur n'est pas trouvé dans l'arbre binaire de recherche, l'appel est traité par l'appel de la fonction standard "shutdown" dont la valeur de retour est directement retournée vers l'utilisateur de l'appel.

L'état de connexion du descripteur de fichier est ensuite vérifié. L'état T_DATAXFER est absolument requis. Tout autre état provoque l'apparition d'une erreur indiquant que la fonction a été émise lors d'une séquence erronée.

Aucune fonction de suppression n'existe dans l'interface XTI, les données entrantes ou sortantes dans les tampons ne peuvent donc être supprimées. Cependant, hors de l'interface XTI (c'est-à-dire en STREAM), il est possible de lire et supprimer les données présentes dans le tampon de lecture.

L'appel système de fonction standard "close" est utilisé pour une déconnexion d'un canal virtuel, permettant ainsi à un utilisateur de transport de libérer la connexion concernée. L'appel standard "close" peut toujours être utilisé sur un descripteur de fichier de l'interface "socket". La règle est que l'appel "close" efface de la table de références objets des processus le descripteur de fichier concerné et lorsqu'il est la dernière référence à l'objet déterminé, alors celui-ci est désactivé. Le dernier appel "close" sur un port de l'interface "socket" implique que l'information associée et les données mises en attente sont supprimées. L'appel "close" contient le retour de l'appel "socket" local spécifié (domaine, type, protocole). Les valeurs de retour sont, soit la valeur (0) si l'appel a abouti, soit la valeur (-1) en cas d'erreur.

La fonction correspondante en mode XTI-CO est "t_close", elle peut être lancée dans n'importe quel état excepté l'état T_UNINIT, une commande de déconnexion étant alors émise par l'utilisateur actif ou reçue par l'utilisateur passif. Le fournisseur de transport est informé que l'utilisateur n'utilise plus l'extrémité de connexion de transport spécifiée par le descripteur de fichier. En outre, le fichier associé à l'extrémité de connexion de transport est fermé. La fonction "t_close" contient l'extrémité de connexion de transport spécifiée (descripteur de fichier identifiant l'extrémité de connexion de transport locale au travers de laquelle les données circulent). Les valeurs de retour sont, soit la valeur (0) si l'appel a abouti, soit la valeur (-1) en cas d'erreur.

Un appel système standard "close" est effectivement exécuté lorsque le descripteur de fichier n'appartient plus à la liste gérée dans l'arbre binaire de recherche.

La fonction "t_close" devrait être appelée à partir de l'état T_UNBND, mais comme cette fonction ne vérifie pas l'information d'état, elle peut donc être appelée à partir de n'importe quel état pour fermer une extrémité de connexion de transport. états T_IDLE, T_INCON ou T_OUTCON ce sont les appels "t_unbind" et "t_close" qui sont exécutés et dans l'état T_DATAXFER un appel "t_snddis" ou "t_rcvdis" ("t_snddis": demande de déconnexion, l'appel étant émis par l'utilisateur actif ou, "t_rcvdis" : recherche de la cause de la déconnexion, l'appel étant émis par l'utilisateur passif) est exécuté dans un premier temps puis ensuite seulement sont exécutés les appels "t_unbind" et "t_close".

Finalement si aucun autre processus ne fait référence aux descripteurs de fichiers de l'extrémité de connexion de transport (tous les descripteurs de fichiers associés au fichier qui a été fermé):
- tous les descripteurs de fichiers associés à l'extrémité de connexion considérée sont automatiquement libérés,
- toute connexion de transport qui pouvait être liée à cette extrémité de connexion est interrompue,
- il y a passage de l'état qui était obligatoirement différent de l'état T_UNINIT vers l'état T_UNINIT et donc retour au tout début du processus.

D'autres appels système de fonctions standards peuvent être également utilisés. Ainsi il est possible de contrôler les entrées/sorties de l'interface "socket" au moyen des appels de fonctions "ioctl" et "fcntl". Ces appels peuvent être dédiés spécifiquement au contrôle des opérations sur l'interface "socket", une application n'utilisant un tel appel qu'une fois qu'un descripteur de fichier a été affecté à une entrée de l'interface "socket". Dans ce cas, cet appel contient, le retour de l'appel "socket" local spécifié (domaine, type, protocole), la commande spécifiée sous forme d'un code qui permet de sélectionner la fonction de contrôle à exécuter, et enfin l'argument spécifié qui représente l'information additionnelle nécessaire pour interpréter certaines valeurs du code de la commande spécifiée.

La commande spécifiée peut selon le code permettre et ceci de manière non limitative:
- de connaître l'identité du groupe de processus qui contient le processus courant (SIOCGPGRP).
- de demander que l'émission d'un signal asynchrone se fasse sur un processus ou sur un groupe de processus (SIOCSPGRP).
- de s'assurer que le pointeur de lecture d'une entrée "socket" est ou n'est pas couramment positionné dans le flot de données à l'endroit où sont reçues des données hors-bande (SIOCATMARK).
- de retourner le nombre d'octets en attente de lecture sur une entrée "socket" (FIONREAD).
- de commuter l'entrée "socket" dans un mode d'entrée/sortie soit bloquant, soit non-bloquant (FIONBIO).

Les appels "ioctl" généraux qui permettent de contrôler des opérations relatives à des fichiers peuvent être également utilisés pour contrôler l'interface "socket". Les arguments sont identiques à ceux décrits précédemment en ce qui concerne le retour de l'appel "socket" local spécifié et l'argument spécifié mais diffèrent en ce qui concerne la commande spécifiée. Ainsi, dans ce cas, le code peut permettre de sélectionner la fonction de commande qui doit être exécutée relativement à un fichier ou à un descripteur de fichier:
- fermeture des entrées "socket" lors du chargement d'un nouveau code sur le processus.
- positionnement ou suppression du mode d'entrées/sorties asynchrone.

Les appels "ioctl" peuvent être, en outre utilisés pour contrôler l'exploitation des 'interfaces de communication réseau ("ifnet"). Ces appels permettent de rechercher et retrouver des interfaces à partir de leurs adresses ou de retrouver une interface dans un réseau donné. Les arguments sont identiques à ceux décrits précédemment excepté en ce qui concerne d'une part la structure de la requête qui utilise des définitions de paramètres et d'autre part la commande spécifiée de la fonction à exécuter sur l'interface donnée pour obtenir par exemple l'adresse "ifnet" (adresse de l'interface), l'adresse de diffusion générale ("broadcast"), la liste "ifnet" (utilisée pour retrouver la configuration de l'interface), des adresses entre entités de même niveau (vers une machine distante avec laquelle un lien est établi) ou des drapeaux "ifnet" (le plus souvent l'interface réseau peut être identifiée : connectée ou non, opérationnelle ou attachée à une adresse de diffusion générale).

La conversion des fonctions précédentes peut être faite à l'aide de la fonction "ioctl" sur des flots de données (l'interface XTI étant mise en oeuvre au moyen de flots de données : STREAMS). Dans ce cas la fonction "ioct1" contient le descripteur de fichier spécifié (fichier ouvert qui se réfère à un flot de données), la commande spécifiée (déterminant la fonction de contrôle à exécuter) et l'argument spécifié (représentant l'information additionnelle nécessaire pour certaines valeurs du code, c'est en général un nombre entier ou un pointeur vers une structure de données pour une commande spécifique). Plus particulièrement, la commande spécifiée peut permettre et ceci de manière non limitative:
- de transmettre vers la tête du flot de données l'information exprimant que l'utilisateur désire que le noyau du système émette un signal (I_SETSIG) lors de l'apparition d'un évènement particulier sur ledit flot de données associé aux descripteurs de fichiers (se référant à ce flot de données),
- de retourner les informations concernant les évènements pour lesquels le processus d'appel a demandé l'émission du signal SIGPOLL (I_GETSIG),
- de compter le nombre d'octets dans les blocs de données du premier message de la file d'attente au début du flot de données (I_NREAD).

La conversion des fonctions précédentes peut être faite à l'aide de la fonction "fcntl" sur des flots de données. La fonction "fcntl" contient le descripteur de fichier spécifié (fichier ouvert qui peut faire référence au flot de données), la commande spécifiée (déterminant la fonction de contrôle à exécuter) et l'argument spécifié. La commande spécifiée peut par exemple être utilisée pour:
- positionner ou lire la position du drapeau de fermeture des fichiers à la suite d'un nouveau lancement de processus (F_SETFD, F_GETFD),
- retourner la valeur des différents drapeaux d'états qui fixent les modes synchrone (O_SYNC), asynchrone (FASYNC), non-bloquant (O_NDELAY),
- demander que l'émission d'un signal asynchrone se fasse sur un processus ou sur un groupe de processus (SIOCSPGRP),
- connaître l'identité du groupe de processus qui contient le processus courant (SIOCGPGRP).

De manière générale le contrôle des entrées/sorties sur les entrées "socket" peut être émulé à l'aide des fonctions de contrôle sur les flots de données (STREAMS).

Le module W peut également traiter des entrées/sorties asynchrones. Pour cela, un signal spécifique interrompt le module pour lui indiquer l'arrivée d'entrées/sorties asynchrones, en réponse à ce signal un avertissement est émis par le module vers l'application. Les entrées/sorties asynchrones peuvent apparaître lors de l'exécution de différents appels de fonctions critiques. Le comportement relativement aux appels de fonctions peut être résumé ci-après:
- un événement asynchrone survient sur une extrémité de connexion de transport lors de l'exécution d'un appel "connect". Un signal est reçu par le module W et un appel "t_rcvconnect" (réception de la confirmation après exécution d'un appel "t_connect") peut être utilisé pour déterminer l'état de la requête de connexion émise précédemment en mode asynchrone. La connexion est établie dès que l'appel "t_rcvconnect" a abouti. En retour la structure d'adresse d'appel contient le point d'accès du service de transport (TSAP) distant qui a émis l'appel.
- un événement asynchrone survient lors de l'application d'un appel "accept", au moment de l'extraction d'une première connexion de la file d'attente et de la création d'une entrée "socket" de communication. Un signal est reçu par le module W et un appel "t_listen" peut être effectué. Par défaut ce dernier s'exécute en mode synchrone et attend l'arrivée d'une indication de connexion avant de répondre en retour à l'utilisateur passif. Cependant si le mode non-bloquant a été sélectionné par l'intermédiaire d'appels "t_open" ou "fcntl", l'appel "t_listen" s'exécute de manière asynchrone, se réduisant à une scrutation des indications de connexions existantes. Si aucune connexion n'est en attente il est retourné une erreur (valeur (-1)). Dans le cas d'une exécution asynchrone, il est possible d'utiliser un numéro de séquence (dont la valeur permet d'identifier de façon unique l'indication de connexion retournée) pour attendre plusieurs indications de connexion multiple avant de répondre à l'une d'entre elles.
- un événement asynchrone survient lors de l'exécution d'un appel "send" pour l'émission d'un flot de données normales ou d'un flot de données express vers une connexion. Un signal est reçu par le module W et un appel "t_snd" peut être effectué. Par défaut il s'exécute en mode synchrone et peut, en outre, attendre si le flot de données contient des restrictions empêchant momentanément l'acceptation des données par le fournisseur de transport local au moment où est effectué l'appel. Cependant, si le mode non-bloquant a été sélectionné par l'intermédiaire des appels "t_open" ou "fcntl", l'appel "t_snd" s'exécute de maniére asynchrone. En cas de restriction de contrôle de flots de données l'appel échoue mais le processus peut en être informé au moyen d'un signal et lorsque disparaissent lesdites restrictions, les flots de données (normales ou express) peuvent être réémis.
- un événement asynchrone survient lors de l'exécution d'un appel "recv" pour la réception de flots de données (normales ou express) sur une connexion. Un signal est reçu par le module W et un appel "t_rcv" peut être effectué. Par défaut ce dernier s'exécute en mode synchrone et attend l'arrivée de données si aucune n'est à ce moment disponible. Cependant, si le mode non-bloquant a été sélectionné par l'intermédiaire des appels "t_open" ou "fcntl", l'appel "t_rcv" s'exécute en mode asynchrone, il échoue en l'absence de données sauf si l'utilisateur peut être informé de l'arrivée de flots de données (normales ou express) après examen des signaux chargés de l'en avertir.

Des fonctions de duplication peuvent être également utilisées. En effet, la plupart des applications TCP/IP nécessitent la duplication d'un descripteur de fichier ouvert. Le module W, dans ce cas, reçoit un appel système "dup" (duplication) et le convertit en un appel "fcntl" qui contient le descripteur de fichier spécifié, la commande de duplication du descripteur de fichier et l'argument spécifié. En réponse à la commande de duplication un nouveau descripteur de fichier est normalement retourné. Dans ce cas, le nouveau fichier:
- est le plus petit descripteur de fichier disponible supérieur ou égal à l'argument spécifié,
- se réfère au même objet que le descripteur de fichier d'origine,
- utilise en commun le même pointeur de fichier,
- utilise en commun le même mode d'accès,
- utilise en commun les mêmes drapeaux d'états de descripteur de fichier,
- possède un drapeau spécifique sélectionné de manière à laisser ouvert le fichier à la suite de la création d'un nouveau processus.

En réponse à la commande de duplication, une erreur peut être également retournée si :
- le nombre maximum autorisé de descripteurs de fichiers est atteint ou,
- l'argument spécifié est négatif ou plus grand que le nombre maximum autorisé de descripteurs de fichiers par processus.

Le module W peut également recevoir un appel système "dup2" et le convertir en un appel "fcntl" qui contient le descripteur de fichier spécifié, la commande de duplication du descripteur de fichier et un deuxième descripteur de fichier dupliqué. Dans ce cas, il est vérifié d'abord que le second fichier est fermé, sinon ce dernier est fermé.

Le module W met périodiquement à jour l'arbre binaire de recherche avec les différents descripteurs de fichiers . Il crée, au moins, dans cet arbre, une référence nouvelle de descripteur pour la consultation des informations du fichier d'origine. Il partage donc les mêmes informations (utilisées en commun) que celles du descripteur de fichier d'origine. Si nécessaire, une liste chaînée est alors créée reliant les descripteurs de fichiers dupliqués.

En conclusion, le procédé de conversion d'adressage selon l'invention permet de fournir, à toute application communiquant dans le domaine INTERNET (avec des protocoles TCP/IP), la possibilité de dialoguer au travers des couches de communications OSI et d'être ainsi directement exploitée dans un réseau OSI-CO, (sans autre protocole de communication), tout se passant comme si ladite application continuait de dialoguer au travers du protocole TCP/IP, l'accès aux couches OSI étant transparent. La diffusion des messages au travers des couches OSI est obtenue sans aucune modification du code source de l'application (notamment, sans aucune modification des programmes utilisés par l'application pour communiquer) ni aucune transformation du comportement des appels de télécommunication employés dans l'application. La conversion d'adressage est donc totalement automatique, dès lors qu'un module de conversion est ajouté au moment de la phase d'édition de liens (dernière étape de production de l'exécutable). Ce module de conversion est en fait une librairie correspondant à un ensemble de fonctions, il est donc de très faible coût. En outre, ce module de conversion comporte un sous-module de service permettant d'élaborer un ensemble spécifique d'extensions du système ce qui permet d'assurer une parfaite portabilité de l'application.

## Revendications

1. Procédé de conversion d'adressage pour le portage d'applications de télécommunication du réseau TCP/IP sur le réseau OSI-CO, l'accès aux dits réseaux étant autorisé par l'intermédiaire d'une interface dite "socket" pour le réseau TCP/IP et d'une interface dite "XTI" pour le réseau OSI-CO, caractérisé en ce que les appels de l'interface dite "socket" sont, ainsi qu'une pluralité d'appels système du genre lecture, écriture, fermeture, dans un premier temps orientés, au moment de la phase d'édition de liens avant l'obtention de l'exécutable, vers un module de conversion automatique d'adressage du genre librairie réalisant la conversion des adresses propres au réseau TCP/IP en adresses du réseau OSI-CO et permettant le passage du protocole TCP/IP vers le protocole OSI-CO, puis après conversion les appels sont transmis vers l'interface dite "XTI" pour être alors directement exploités dans le réseau OSI-CO, seuls les appels destinés au réseau TCP/IP étant traités, tout autre appel étant renvoyé vers le système.

2. Procédé de conversion d'adressage selon la revendication 1, caractérisé en ce que, lorsque l'appel de l'interface dite "socket" est destiné au réseau TCP/IP, il est d'abord créé une ressource propre en mémoire pour conserver la trace de la connexion, puis l'interface dite "XTI" est appelée pour l'ouverture de ladite connexion, l'ensemble étant géré au moyen d'un arbre binaire de recherche.

3. Module de conversion d'adressage utilisé dans le procédé selon la revendication 1 ou 2, caractérisé en ce qu'il est principalement constitué d'un premier sous-module LIB formant la librairie principale et contenant une table de correspondance MT entre les fonctions de communication TCP/IP et les fonctions de conversion incluses dans l'interface d'entrée IW du module W, d'un second sous-module AM de service de conversion d'adresses IP et OSI, d'un troisième sous-module SBT d'enregistrement des informations de connexion gérant lesdites informations au moyen d'un arbre binaire de recherche et d'un quatrième sous-module KE de service pour l'élaboration d'un ensemble spécifique d'extensions au système.

4. Module de conversion d'adressage selon la revendication 3, caractérisé en ce que la table de correspondance MT incluse dans le premier sous-module LIB fournit avantageusement une correspondance bijective, telle qu'à toute fonction de communication TCP/IP par l'intermédiaire du mécanisme des "sockets" , il existe une fonction et une seule dans l'interface IW qui exécute le service demandé par l'application APP, le nom des appels, le nombre des arguments de paramètres d'un appel, la sémantique et l'enchaînement des appels étant exactement conservés.

5. Module de conversion d'adressage selon la revendication 4, caractérisé en ce que le second sous-module AM de service de conversion d'adresses forme également une librairie et effectue la conversion entre d'une part les adresses IP comportant l'adresse réseau de la machine concernée et le port relatif au service accédé et d'autre part les adresses OSI comportant le point d'accès de service du réseau (NSAP) et le sélecteur de transport (TSEL), ladite conversion pouvant être effectuée dans les deux sens, adresses IP vers adresses OSI ou adresses OSI vers adresses IP.

6. Module de conversion d'adressage selon la revendication 5, caractérisé en ce que le troisième sous-module SBT d'enregistrement des informations de connexion gérées par un arbre binaire de recherche fournit un service indépendant sous la forme d'une librairie permettant d'enregistrer, trier, rechercher et supprimer de façon optimale tous les éléments d'information significatifs relatifs à une connexion donnée.

7. Module de conversion d'adressage selon la revendication 6, caractérisé en ce que le quatrième sous-module de service permet d'élaborer un ensemble spécifique d'extensions au système pour rediriger et renvoyer, dans le cadre du mécanisme des "sockets" et par l'intermédiaire du noyau système, les appels de télécommunications non destinés au réseau TCP/IP et qui ne sont donc pas convertis par le module de conversion, vers la librairie TCP standard.
